# EUROPÄISCHE PATENTSCHRIFT

(11) **EP 0 994 917 B1**
(45) Veröffentlichungstag und Bekanntmachung des Hinweises auf die Patenterteilung: **12.06.2002**
(21) Anmeldenummer: 98933646.6
(22) Anmeldetag: 26.06.1998
(51) Int. Cl.: C08L 3/02, C08L 97/00

(54) **THERMOPLASTISCHE MISCHUNG AUF BASIS VON STÄRKE ZUR HERSTELLUNG VON BIOLOGISCH ABBAUBAREN FORMKÖRPERN**
STARCH-BASED THERMOPLASTIC MIXTURE FOR PRODUCING BIODEGRADABLE SHAPED BODIES
MELANGE THERMOPLASTIQUE A BASE D'AMIDON POUR LA FABRICATION DE CORPS MOULES BIODEGRADABLES

(30) Priorität: 09.07.1997 DE 19729268
(43) Veröffentlichungstag der Anmeldung: 26.04.2000
(73) Patentinhaber: Celanese Ventures GmbH, 65926 Frankfurt am Main (DE)
(72) Erfinder: BENGS, Holger, D-60598 Frankfurt (DE); BÖHM, Gitte, D-60439 Frankfurt (DE)
(74) Vertreter: Luderschmidt, Schüler & Partner
(86) Internationale Anmeldenummer: EP9803922
(87) Internationale Veröffentlichungsnummer: WO9902596

(56) Entgegenhaltungen:
- WO-A-95/04111
- WO-A-98/06785
- DE-A- 4 014 176
- DE-A- 4 331 747
- GB-A- 476 344
- US-A- 2 355 180

## Beschreibung

Thermoplastische Mischung auf Basis von Stärke zur Herstellung von biologisch abbaubaren Formkörpern mit verbesserten Eigenschaften, Herstellung der Mischung sowie Verwendung

Die Erfindung bezieht sich auf das Gebiet der thermoplastischen Verarbeitung von polymeren Materialien. Insbesondere betrifft die Erfindung thermoplastische Mischungen auf Basis von Stärke, die Herstellung solcher Mischungen sowie die Verwendung dieser Mischungen zur Herstellung von biologisch abbaubaren Formkörpern wie Formteilen oder Folien, welche verbesserte Eigenschaften, beispielsweise verbesserte mechanische Eigenschaften, aufweisen.

Das technische Gebiet der Biopolymeren erfreut sich vor allem aufgrund von ökolgischen Gesichtspunkten eines stetig wachsenden Interesses.

Biopolymere, wie etwa Polysaccharide und Proteine besitzen als biokompatible Materialien den großen Vorteil einer grundsätzlich guten biologischen Abbaubarkeit und Verträglichkeit. Im Zuge des vermehrten Einsatzes von sog. hydrophilen Polymeren als natürliche und damit physiologisch verträgliche und abbaubare Kunststoffe für vielfältigste Anwendungsbereiche, werden auch erhebliche Anstrengungen unternommen, solche Biopolymere, unter anderem auch Stärke, mittels der bekannten Kunststoffverarbeitungstechniken zu verarbeiten, d.h. beispielsweise mittels Spritzguß und Extrusion. Allerdings mangelt es daraus hergestellten Produkten, wie Formteilen oder Folien, häufig an ausreichenden mechanischen Eigenschaften, wie zum Beispiel an einer hinreichenden Festigkeit oder aber auch an einer ökonomischen Bereitstellung entsprechender Ausgangsmaterialien.

Abhilfe kann bedingt durch chemische Abwandlung der Biopolymere geschaffen werden. So gibt es in großer Zahl Reaktionen, die zur Modifikation von beispielsweise Stärke eingesetzt werden. Darunter fallen oxidative Prozesse, polymeranaloge Umsetzungen mit organischen Chemikalien oder Vernetzungsreaktionen.

Bei der Weiterverarbeitung von Biopolymermischungen, insbesondere Stärkemischungen, mittels herkömmlicher Polymerprozeßtechnologie ist in den überwiegenden Fällen ein Aufschmelzen der Polymermischung von Interesse (z.B. Spritzguß, Blasformung, Extrusion, Coextrusion, Blasextrusion). Dafür ist ein thermoplastisches Verhalten der Formmassen auf Basis von Biopolymeren erforderlich.

Häufig sind jedoch Stoffe, die man zur besseren Plastifizierung der thermoplastischen Mischungen einsetzen muß, nachteilig für die mechanischen Eigenschaften der aus den thermoptastischen Mischung gefertigten Produkte. Versucht man zum Beispiel, das thermoplastische Verhalten beispielsweise von Stärke durch Vernetzung zu verbessern, wobei oftmals bifunktionelle Moleküle auf der Basis von Aldehyden eine wichtige Rolle spielen, wie etwa Glyoxal, Glutardialdehyd, Dialdehydstärke, aber auch auf der Basis von Diisocyanaten, Epoxiden, Epichlorhydrin, Diester, etc., kann es bei einem zu hohen Gehalt an Vernetzer dazu kommen, daß das Ausmaß der Vernetzungsreaktion dem gewünschten Effekt, welcher in einer besseren Plastifizierung der Stärke besteht, entgegenwirkt Insbesondere resultiert eine stärkere Vernetzung in einem unlöslichen aber quellbaren Produkt.

Zum speziellen Stand der Technik bezüglich thermoplastischer Stärkematerialien werden die Druckschriften

| | |
|---|---|
| WO 90/05161 (PCT/CH89/00185) = D1, | GB 476 344 = D5, |
| DE-A 39 31 363 = D2, | DE 43 31 747 = D6, |
| DE 44 12 136 = D3, | DE 40 14 176 = D7 und |
| DE 42 07 131 = D4, | USP 2,355,180 = D8 |

genannt

D1 beschreibt die Herstellung thermoplastisch verarbeitbarer Stärke durch Beimischung eines Zuschlagstoffes zu im wesentlichen nativer oder natürlicher Stärke und Schmelzen des Gemisches durch Zuführen von Wärme und mechanischer Energie. Beim Zuschlagstoff handelt es sich um eine Substanz, welche die Schmelztemperatur der Stärke erniedrigt, so daß die Schmelztemperatur der Stärke zusammen mit diesem Zuschlagstoff unterhalb der Zersetzungstemperatur der Stärke liegt. Konkret handelt es sich beim Zuschlagstoff beispielsweise um DMSO, 1,3-Butandiol, Glyzerin, Ethylenglycol, Propylenglycol, Butylenglycol, Diglycerid, Diglycolether, Formamid, N,N-Dimethylformamid, N-Methylformamid,, N,N'-Dimethylhamstoff, Dimethylacetamid, N-Methylacetamid. Die D1 schlägt außerdem den Zusatz eines Vernetzungsmittels aus der Gruppe der zwei- oder mehrwertigen Carbonsäuren und/oder Anhydride, der Halogenide und/oder Säureamide von zwei- oder mehrwertigen Carbonsäuren, der Derivate von zwei- oder mehrwertigen anorganischen Säuren, der Epoxide, Formaldehyd, der Harnstoffderivate, der Divinylsulfone, der Isocyanate, der ein- oder mehrwertigen Oxoverbindungen sowie Cyanamid vor.

D2 bezieht sich auf ein Verfahren, zur Reduktion der Quellbarkeit von Stärke durch Modifikation, dergestalt daß ein Vernetzungsreagenz pur oder in verkapselter Form hinzugegeben wird, und die Vernetzungsreaktion durch anschließendes Tempern bei erhöhter Temperatur erreicht wird. Die eingesetzten Vernetzungsmittel sind u.a. Harnstoffderivate, Urotropin, Trioxan, Di- oder Polyepoxide, Di- oder Polychlorhydrine, Di- oder Polyisocyanate, Kohlensäurederivate, Di-Ester oder auch anorganische Polysäuren, wie Phosphorsäuren oder Borsäuren. Die beschriebenen Mischungen zeichnen sich dadurch aus, daß sehr hohe Gewichtsverhältnisse an Vernetzer eingesetzt werden (zwischen 10 und 100 Gew. %), um durch die anschließende thermische Behandlung eine entsprechende Erhöhung der mechanischen Stabilität zu erzielen.

Verwendung findet Lignin u.a. in Adhäsiven und Leimen, wie bspw. in D3 beschrieben. Die heterogene Mischung von Ligningsulfonat mit Kolophoniumharz und Stärke liefert in wäßriger Dispersion ein Leimungsmittel für die Oberflächen- und Massenleimung.

D4 beschreibt die Verwendung flüssiger Raucharomen bei der Herstellung von tubularen Viskosehüllen für die Lebensmittelverpackung durch Fällungsprozesse, mit dem Ziel insbesondere Fleischprodukten ein charakteristisches Eigenschaftsprofil zu verleihen. Nachteilig ist, daß das Flüssigaroma durch weitere Arbeitsschritte nach dem Herstellungsprozeß aufgebracht werden muß.

D5 beschreibt die Verwendung von Lignin für Formmassen sowie den Zusatz von thermoplastischen harzartigen Materialien wie Casein oder Celluloseacetat.

D6 beschreibt ein thermoplastisch verarbeitetes Naturstoff-Granulat, das neben Lignin ein Protein und Weichmacher, u. a. Wasser, enthalten kann.

D7 betrifft biologisch abbaubare Formmassen, die aus einem Polymerisat aus Lignin und Cellulose bestehen.

In D8 wird ein Verfahren zur Herstellung einer thermoplastischen Formmasse aus Lignin und Weizengluten oder einem anderen Protein beschrieben.

Angesichts des hierin angegebenen und diskutierten Standes der Technik war es mithin Aufgabe der Erfindung, eine thermoplastische Mischung auf Basis von Stärke, zur Verfügung zu stellen, welche die Herstellung von biologisch abbaubaren Formkörpern mit verbesserten Eigenschaften, vorzugsweise besseren mechanischen Eigenschaften gestattet

Aufgabe der Erfindung war auch ein Verfahren zur Herstellung einer thermoplastischen Mischung für Extrudate oder Granulate sowie die Verwendung der thermoplastischen Mischung.

Gelöst werden diese Aufgaben durch eine Mischung mit den Merkmalen des Anspruches 1. Bevorzugte Ausführungsformen sind Gegenstand der abhängigen Produktansprüche. In verfahrenstechnischer Hinsicht löst der Gegenstand des Anspruchs 12 die bis zur Erfindung bestehenden Probleme. Vorteilhafte Modifikationen des erfindungsgemäßen Verfahrens werden in den auf den unabhängigen Verfahrensanspruch rückbezogenen Unteransprüchen unter Schutz gestellt. Eine Reihe von Verwendungen der erfindungsgemäßen thermoplastisch verarbeitbaren Mischungen auf Stärkebasis geben die einzelnen nebeneinander geordneten Verwendungsansprüche an.

Dadurch, daß eine thermoplastische Mischung auf Basis von Stärke einen Gehalt an einer wirksamen Menge Lignin aufweist, gelingt es in nicht ohne weiteres vorhersehbarer Weise, mit je nach beabsichtigter Anwendung unterschiedlich hohen Ligninanteilen, die Eigenschaften solcher Materialien zu modifizieren. Insbesondere bei Folienanwendungen lassen sich positive Einflüsse auf die mechanischen Eigenschaften und weitere Gebrauchseigenschaften, wie den Geruch der Folie, feststellen.

Aufgrund des natürlichen Charakters des Zuschlagstoffes Lignin ist auch ein Einsatz im Lebensmittelbereich möglich.

Dabei verleiht Lignin sowohl der thermoplastischen Formmasse selbst als auch den daraus gefertigten Formkörpern jedweder Art aufgrund seiner chemischen Natur einen angenehmen aromatischen Geruch. Besonders bei der Herstellung von Folien und Filmen macht sich dieser nicht im voraus zu ersehende Effekt positiv bemerkbar, so daß eine Verwendung unter dem Aspekt des Einsatzes als Aromakomponente oder Rauchersatz in Betracht kommt.

Neben der Beeinflussung von Aussehen, Geruch und Geschmack ist ein positiver Einfluß auf das Konservierungsverhalten der thermoplastischen Formmassen, sowie daraus resultierender Formkörper und Folien nicht auszuschließen.

Aufgrund der erfindungsgemäß notwendigen Verarbeitungstemperaturen war nicht ohne weiteres vorhersehbar, daß sich ein derartiger positiver Effekt durch die Verwendung von Lignin und seinen Derivaten ergibt.

Die Erfindung besteht somit vor allem im Einsatz und der Verwendung von Lignin zur Modifizierung von thermoplastisch verarbeitbaren Materialien, wie Proteinen und/oder Polysacchariden. Dabei ist es bislang trotz der Allgegenwart des Lignins in der Natur von der Fachwelt bis zur Erfindung überraschender Weise noch nicht in Betracht gezogen worden, daß die Kombination eines aus Holz separierten natürlichen Materials, nämlich Lignin , mit ; Stärke und deren Derivaten zu einer vorteilhaften Modifizierung von thermoplastischen Mischungen führt, welche diese Biopolymere enthalten, und zur Verbesserung der Eigenschaften daraus hergestellter Produkte.

Neben den genannten Verbesserungen der Eigenschaften der Produkte ist ein weiterer Vorteil der vorliegenden Erfindung, daß ein bisher nicht genutzter Abfallstoff aus der Papierherstellung einer sinnvollen Verwendung zugeführt wird. Dabei wird neben dem Kostenaspekt durch die günstigen Einstandskosten des Lignins auch ein Beitrag zu einer nachhaltigen Entwicklung geleistet.

Besonders Vorteilhaft für die thermoplastischen Mischungen der Erfindung sind unter anderem die bei Addition von Wasser auftretende thermoplastischen Eigenschaften des Lignins, sowie seine stabilisierenden Effekte in Kombination mit Biopolymeren, vorzugsweise Polysacchariden.

Darüber hinaus ist es durch den Einsatz von Lignin in thermoplastischen Formmassen möglich, auf die Zugabe eines Weichmachers zu verzichten. Lignin hat somit auch weichmachende Eigenschaften.

Eine zweckmäßige Ausgestaltung der Erfindung sieht weiterhin vor, daß das Gewichtsverhältnis von Lignin zu Stärke, im Bereich von 1 : 1000 bis 1 : 1, vorzugsweise zwischen 1 : 100 und 1 : 2, ist.

Weiters ist es besonders vorteilhaft, daß die Stärke native, chemisch modifizierte, fermentativ erhaltene, rekombinant erhaltene und/oder durch Biotransformation hergestellte Stärke oder ein Polysaccharid ist, daß es ein Derivat der genannten Stärkesorten ist oder daß es sich um Mischungen von einer oder mehreren der vorgenannten Stärken und/oder Derivaten von Stärke handelt.

Beste thermoplastische Modifikationen der Stärken werden insbesondere dann erhalten, wenn das Lignin ein Alkali-Lignin ist.

Von besonderem Interesse für die Erfindung sind thermoplastische Mischungen aufweisend
A) 33 - 90 Gew.-% (w/w) einer oder mehrerer physiologisch unbedenklicher, biologisch abbaubarer, thermoplastisch verarbeitbarer Stärken;
B) 5 - 35 Gew.-% (w/w) Wasser;
C) 0,5 - 33 Gew.-% (w/w) Lignin;
   wobei die Komponenten A) bis E) zusammen 100 Gew.-% ergeben; sowie gegebenenfalls bis
D) 50 Gewichtsteile, bezogen auf 100 Gewichtsteile der Summe der Komponenten A) bis C), eines oder mehrerer Weichmacher; und
E) bis 200 Gewichtsteile, vorzugsweise nicht mehr als 100 Gewichtsteile, bezogen auf 100 Gewichtsteile der Summe der Komponenten A) bis C), weiterer üblicher Zusätze.

Hiermit werden thermoplastisch verarbeitbare, stärkebasierte Mischungen zur Verfügung gestellt, die über eine ausgezeichnete thermoplastische Verarbeitbarkeit verfügen, die zu Formteilen verarbeitet werden können, welche über hervorragende mechanische Eigenschaften verfügen und die trotzdem leicht biologisch abbaubar, beispielsweise verrott- oder kompostierbar sind.

Außerdem sind die Produkte, wie Formkörper oder Folien, im wesentlichen biokompatibel und gegebenenfalls eßbar, was den Weg zu eßbaren Verpackungen, also insbesondere Lebensmittelverpackungen, ebnet.

Unter Lebensmittelverpackungen sind dabei sowohl Umverpackungen zu verstehen, die mit dem Lebensmittel nur temporären Kontakt haben, als auch Verpackungen, wie Schläuche, Hüllen oder Überzüge, die an ihrer Innenoberfläche ständigen Kontakt mit dem Lebensmittel haben und daher auch bei der Nahrungsmittelaufnahme mit zu sich genommen werden können. Die Verpackungen eignen sich daher neben anderen für Obst, Eier, Käse, Bonbonwaren, Kuchen, Kekse oder Brausetabletten, Getränke, Fleisch, Wurstwaren und Fleischbrät.

Der Einsatz der aus den thermoplastischen Formmassen gemäß der Erfindung erhältlichen Formkörper ist dabei nicht auf die Verwendung in Kombination mit temporären Produkten beschränkt, sondern kann auch auf den temporären Einsatz zum Schutz von Gebrauchsgegenständen und Investitionsgütern bei Transport oder Lagerung angewendet werden. Insbesondere ist hier an den Schutz vor klimatischen Einflüssen zu denken, wie sie etwa beim überseeischen Transport von Automobilen auftreten.

Insbesondere wurde nun überraschend festgestellt, daß beim Einsatz von besonderen, definierten Zuschlagstoffen, wie Lignin, unter speziellen Bedingungen Effekte erzielt werden, welche die Stärke zwar einerseits modifizieren andererseits jedoch eine Weiterverarbeitung des Biopolymers, insbesondere der Stärke mit üblichen thermoplastischen Kunststoffverarbeitungstechniken zulassen.

Unter den besonderen erfindungsgemäßen Bedingungen läßt sich die Modifizierungs-Reaktion während der Verarbeitung durchführen. Dabei übt der erfindungsgemäße Zuschlagstoff auch bereits in geringen Konzentrationen einen positiven Einfluß auf die Eigenschaften und die Verarbeitbarkeit von thermoplastischen Mischungen auf Basis von Stärke aus.

Die Komponente A) der erfindungsgemäßen thermoplastischen Mischung auf Basis von Stärke.

Die Komponente A) der erfindungsgemäßen thermoplastisch verarbeitbaren Mischung ist eine essentielle Komponente.

Bei der Komponente A) handelt es um eine oder mehrere Stärken, eines oder mehrere ihrer Derivate oder um Mischungen von Stärke und Stärkederivaten, welche in Mengen zwischen 33 und 90 Gew.-% in der Mischung der Erfindung enthalten sein können.

Bevorzugt sind für die Komponente A) vor allem auch Mischungen der genannten Stärken oder Stärkederivate untereinander.

Eine wichtige Gruppe von Stärken umfaßt die aus pflanzlichen Rohstoffen gewonnenen Stärken. Hierzu zählen unter anderem Stärken aus Knollen, wie Kartoffeln, Maniok, Maranta, Batata, aus Samen wie Weizen, Mais, Roggen, Reis, Gerste, Hirse, Hafer, Sorghum, aus Früchten, wie Kastanien, Eicheln, Bohnen, Erbsen, u. a. Hülsenfrüchten, Bananen, sowie aus Pflanzenmark, z.B. der Sagopalme.

Die im Rahmen der Erfindung verwendbaren Stärken bestehen im wesentlichen aus Amylose und Amylopektin, in wechselnden Mengen-Verhältnissen (je nach Ursprung).

Besonders gute Ergebnisse erzielt man unter anderem mit Stärken aus Kartoffeln (z.B. ®Toffena der Fa. Südstärke) und Mais (z.B. Maize Starch der Fa. National Starch) oder auch Polyglucanen, die sich durch einen perfekt linearen Aufbau der Polymere auszeichnen.

Die Molekulargewichte der erfindungsgemäß nützlichen Stärken können über einen weiten Bereich variieren. Einsetzbar sind als Basis der erfindungsgemäßen thermoplastischen Mischung solche Stärken, die im wesentlichen aus einem Gemisch von Amylose und Amylopektin bestehen, mit Molekulargewichten M_{w} im Bereich zwischen 5x10⁴ und 1x10⁷. Bevorzugt werden längerkettige Polymere mit Molekulargewichten M_{w} zwischen 1x10⁶ und 5x10⁶.

Bevorzugt werden weiterhin auch lineare Stärken, vorzugsweise Polyglucane, insbesondere 1,4-a-D-Polyglucan, mit Molekulargewichten M_{w} im Bereich zwischen 5x10² und 1x10⁵, bevorzugt mit Molekulargewichten M_{w} zwischen 1x10³ und 5x10⁴.

Neben Formmassen auf Basis von Stärken nativen pflanzlichen Ursprungs gehören zur Erfindung auch solche thermoplastischen Mischungen oder Formmassen mit Stärken, die chemisch modifiziert sind, fermentativ gewonnen wurden, rekombinanten Ursprungs sind oder durch Biotransformation (auch: Biokatalyse) hergestellt wurden.

Unter "chemisch modifizierten Stärken" versteht die Erfindung solche Stärken, bei denen auf chemischem Wege die Eigenschaften im Vergleich zu den natürlichen Eigenschaften verändert wurden. Dies wird im wesentlichen durch polymeranaloge Umsetzungen erreicht, bei denen Stärke mit mono-, bi- oder polyfunktionellen Reagenzien bzw. Oxidationsmitteln behandelt wird. Dabei werden vorzugsweise die Hydroxygruppen der Polyglucane der Stärke durch Veretherung, Veresterung oder selektive Oxidation umgewandelt oder die Modifizierung beruht auf einer radikalisch initiierten Propfcopolymerisation von copolymerisierbaren ungesättigten Monomeren auf das Stärkerückgrat.

Zu besonderen chemisch modifizierten Stärken gehören unter anderem Stärkeester, wie Xanthogenate, Acetate, Phosphate, Sulfate, Nitrate, Stärkeether, wie z. B. nichtionische, anionische oder kationische Stärkeether, oxidierte Stärken, wie etwa Dialdehydstärke, Carboxystärke, Persulfat-abgebaute Stärken und ähnliche Substanzen.

"Fermentative Stärken" sind im Sprachgebrauch der Erfindung Stärken, die durch fermentative Prozesse unter Verwendung in der Natur vorkommender Organismen, wie Pilzen, Algen oder Bakterien gewonnen werden oder unter Einschaltung und Mithilfe von fermentativen Prozessen gewonnen werden können. Beispiele für Stärken aus fermentativen Prozessen umfassen neben anderen Gum Arabicum und verwandte Polysaccharide (Gellan Gum, Gum Ghatti, Gum Karaya, Gum Tragacauth), Xanthan, Emulsan, Rhamsan, Wellan, Schizophyllan, Polygalacturonate, Laminarin, Amylose, Amylopektin und Pektine.

"Stärken rekombinanten Ursprungs" oder "rekombinante Stärken" meint im einzelnen Stärken, die durch fermentative Prozesse unter Verwendung in der Natur nicht vorkommender Organismen, aber unter Zuhilfenahme von gentechnischen Methoden modifizierten natürlichen Organismen, wie Pilzen, Algen oder Bakterien gewonnen werden oder unter Einschaltung und Mithilfe von fermentativen Prozessen gewonnen werden können. Beispiele für Stärken aus fermentativen, gentechnisch modifizierten Prozessen sind neben anderen Amylose, Amylopektin und Polyglucane.

"Durch Biotransformation hergestellte Stärken" bedeutet im Rahmen der Erfindung, daß Stärken, Amylose, Amylopektin oder Polyglucane durch katalytische Reaktion von monomeren Grundbausteinen, im allgemeinen oligomeren Sacchariden, insbesondere Mono- und Disacchariden, hergestellt werden, indem ein Biokatalysator (auch: Enzym) unter speziellen Bedingungen verwendet wird. Beispiele für Stärken aus biokatalytischen Prozessen sind neben anderen Polyglucan und modifizierte Polyglucane, Polyfructan und modifizierte Polyfructane.

Schließlich lassen sich auch unter Verwendung von Derivaten der einzelnen genannten Stärken vorteilhafte thermoplastische Mischungen erhalten. Dabei bedeuten die Begriffe "Derivate von Stärken" oder "Stärkederivate" ganz allgemein modifizierte Stärken, d. h. solche Stärken, bei denen zur Veränderung ihrer Eigenschaften das natürliche AmyloselAmylopektin-Verhältnis verändert wurde, eine Vorverkleisterung durchgeführt wurde, die einem partiellen hydrolytischen Abbau unterzogen wurden oder die chemisch derivatisiert wurden.

Zu besonderen Derivaten von Stärken gehören unter anderem oxidierte Stärken, z.B. Dialdehydstärke oder sonstige Oxidationsprodukte mit Carboxylfunktionen, oder native ionische Stärken (z.B. mit Phosphatgruppen) oder ionisch weiter modifizierte Stärken, wobei sowohl anionische als auch kationische Modifizierungen gemeint sind.

Besonders günstige thermoplastische Mischungen werden erhalten, wenn Stärken eingesetzt werden, die nur einen geringen Anteil anderer Verbindungen, die nicht den Sacchariden zuzurechnen sind (z.B. Proteine, Fette, Öle), aufweisen (z.B. insbesondere Kartoffelstärke), oder ionische Stärken als Grundmaterial oder als Beimischung verwendet werden und/oder durch ihre Einheitlichkeit hinsichtlich der Struktur, des Molekulargewichts und der Reinheit herausragende Polyglucane, z.B. durch Biotransformation hergestelltes 1,4-a-D-Polyglucan, als Stärkebasis eingesetzt werden.
Die erfindungsgemäße thermoplastische Mischung wird rechnerisch bezüglich der Komponente A) oder eines Gemisches aus Komponenten A) auf einen Wassergehalt von Null Prozent korrigiert. D. h., der Wassergehalt der Komponente A) wird bestimmt und bei der Bemessung von 100 Gewichtsteilen entsprechend abgezogen, aber bei der Bemessung der Komponente B) berücksichtigt.

### Die Komponente B) der erfindungsgemäßen Stärkemischung

Die Komponente B) der erfindungsgemäß bevorzugten Mischung ist eine essentielle Komponente.

Wasser ist in einer Menge von 5 bis 35 Gewichtsprozent (w/w) in der Mischung der Erfindung enthalten. Ist die Menge an Wasser unterhalb von 5 Gewichtsprozent, so ist die Destrukturierung und Homogenisierung der Mischung unzureichend. Ist der Wassergehalt höher als 35 Gewichtsprozent, so besteht die Gefahr, daß die Viskosität der Mischung zu niedrig ist.

Bevorzugte Wassergehalte liegen etwa zwischen 7,5 und 30 Gewichtsprozent (w/w), besonders zweckmäßig sind Wasseranteile zwischen 10 und 25 Gewichtsprozent.

In diesen bevorzugten Bereichen findet eine optimale Plastifizierung der Mischung, d. h. Destrukturierung der Stärke, Homogenisierung der Mischung sowie deren Thermoplastifizierung statt.

Die Wassermenge B) beinhaltet neben tatsächlich zugefügtem Wasser auch die rechnerisch zu berücksichtigenden Wassergehalte anderer Komponenten, insbesondere die Menge von in der Komponente A) gebundenem oder enthaltenem Wasser oder gegebenenfalls in den Verbindungen C), D) und E) gebundenes oder enthaltenes Wasser.

Die Natur der Komponente B) ist im wesentlichen nicht weiter kritisch. Man kann VE-Wasser, deionisiertes Wasser aber auch genauso gut Leitungswasser oder Wasser anderen Ursprungs einsetzen, sofern der Gehalt des Wassers an Salzen oder anderen Fremdstoffen im Hinblick auf die beabsichtigte Verwendung tolerabel ist.

### Die Komponente C) der erfindungsgemäßen Stärkemischung

Die Komponente C) der erfindungsgemäßen Mischung ist eine essentielle Komponente.

Die Komponente C) ist in der Mischung der Erfindung in einer Menge von 0,5 bis 35 Gew.-% (w/w) enthalten.

Bevorzugte Mischungen ergeben sich dann, wenn die Komponente C) in einer Menge von wenigstens 1 Gew.-% (w/w) in der Mischung enthalten ist

Von besonderem Interesse sind auch thermoplastische Mischungen, worin die Komponente C) in einer Menge im Bereich von 2,5 bis 30 Gew.-% (w/w) enthalten ist.

Besonders zweckmäßig sind thermoplastische Mischungen, worin die Komponente C) in einer Menge im Bereich von 5 bis 25 Gew.-% (w/w) enthalten ist.

Bei der Komponente C) handelt es sich um Lignin. Dies ist ein natürlicher, hochmolekularer aromatischer Stoff, der in verholzenden Pflanzen die Räume zwischen den Zellmembranen ausfüllt und zu Holz werden läßt. In diesem Zusammenhang wird auch von Lignifizierung bzw. Verholzung gesprochen.

Insbesondere kommen dem Lignin die Aufgaben zu Flüssigkeitshaushalt der Pflanze zu kontrollieren, Festigkeit zu verleihen, sowie Resistenz gegenüber Mikroorganismen aufzubauen.

Einsetzbar mit der Erfindung sind alle aus der Natur gewinnbaren Lignine.

Die Struktur des Lignins ist als höhermolekularer Abkömmling des Phenylpropans aufzufassen. Durch verschiedene Verknüpfungsmöglichkeiten entstehen Lignan- und Cumarin-Strukturen, cycl. Ether, Lactone u.a. mehr.

Bevorzugt werden solche mit einem Molekulargewicht von ca. 5.000 bis 10.000 Dalton.

Ebenso bevorzugt sind Alkali-Lignine.

Nachdem bislang die Verwendung von Alkali-Lignin als Bindemittel für Preßplatten auf Holz- u. Cellulosebasis, als Dispergiermittel, zur Klärung von Zucker-Lösungen, zur Stabilisierung von Asphaltemulsionen und zur Schaumstabilisierung bekannt war, ist die erfindungsgemäße Verwendung besonders erstaunlich.

Dabei ist besonders hervorzuheben, daß Lignin sowohl den Weichmacher ganz oder teilweise ersetzen kann als auch die Möglichkeit eröffnet, den aus den thermoplastischen Formmassen herstellbaren Produkten einen für bestimmte Anwendungen erwünschten aromatischen Geruch zu verleihen.

Die Komponente D) der erfindungsgemäßen Stärkemischung

Die Komponente D) ist optional in der erfindungsgemäßen Mischung enthalten.

Die Menge der Komponente D) ist dann von Bedeutung, wenn die Menge an C) selbst bei höheren mechanischen und/oder thermischen Energien nicht ausreicht, einen genügenden Weichmachereffekt zu erzielen. Ein oder mehrere Weichmacher sind in der Komposition der Erfindung in einer Menge im Bereich bis zu 50 Gewichtsteilen, bezogen auf 100 Gewichtsteile der Summe der Komponenten A) bis C), enthalten.

Bevorzugt ist eine erfindungsgemäße Mischung, die 5 bis 30 Teile Weichmacher aufweist. In diesem Bereich ist die Plastifizierung besonders gut. Überschreitet der Weichmachergehalt eine Menge, die 50 Gewichtsteilen entspricht, wird keine nennenswert bessere Plastifizierung der Mischung beobachtet.

Günstig sind auch Weichmachermengen im Bereich von 7,5 bis 25 Gewichtsteilen, besonders zweckmäßig sind Gehalte an Weichmachern im Bereich von 10 bis 20 Gewichtsteilen, jeweils bezogen auf 100 Gewichtsteile der Summe der Komponenten A) bis C).

Grundsätzlich sind im Rahmen der Erfindung die Begriffe Weichmachungs-, Plastifikations-, Plastifizierungs-, oder Elastifizierungsmittel gleichbedeutend mit Weichmacher.

Einsetzbar sind alle indifferenten, vorzugsweise organischen, Substanzen mit im allgemeinen geringem Dampfdruck, welche ohne chemische Reaktion, vorzugsweise durch ihr Löse- und Quellvermögen, und, aber auch ohne ein solches, mit den Komponenten A) in physikalische Wechselwirkung treten und bevorzugt ein homogenes System mit diesen bilden.

Die erfindungsgemäß einzusetzende Komponente D) verleiht der Mischung vorzugsweise eine erniedrigte Einfriertempemperatur, erhöhtes Formveränderungsvermögen, erhöhte elastische Eigenschaften, verringerte Härte und ggf. gesteigertes Haftvermögen.

Bevorzugte Weichmacher gemäß der Erfindung sind geruchlos, farblos, licht-, kälte- und wärmebeständig, gering hygroskopisch, wasserbeständig, nicht gesundheitsschädlich, schwer brennbar und möglichst wenig flüchtig, neutral reagierend, mit Polymeren und Hilfsstoffen mischbar und weisen ein gutes Gelierverhalten auf. Insbesondere sollen sie gegenüber den Komponenten A) Verträglichkeit, Geliervermögen und weichmachende Wirksamkeit aufweisen.

Weiter sollen die erfindungsgemäß als Komponente D) einsetzbaren Verbindungen eine geringe Migration aufweisen, was insbesondere für Anwendungen der erfindungsgemäßen Formkörper im Lebensmittelbereich von Bedeutung ist.

Zu besonders bevorzugten weichmachenden Komponenten D) gehören unter anderem Dimethylsulfoxid, 1,3-Butandiol, Glyzerin, Ethylenglykol, Propylenglykol, Diglyzerid, Diglycolether, Formamid, N,N-Dimethylformamid, N-Methylformamid, Dimethylacetamid, N-Methylacetamid und/oder N,N'-Dimethylharnstoff.

Besonders zweckmäßig sind auch Polyalkylenoxid, Glycerinmono-, di-, oder -triacetat, Sorbitol, oder andere Zuckeralkohole, wie Erythrit, Zuckersäuren, Polyhydroxysäuren, Saccharide, wie Glucose, Fructose oder Saccharose, sowie Zitronensäure und seine Derivate.

Die Komponente E) der erfindungsgemäßen thermoplastischen Mischung auf Stärkebasis

Die Komponente E) der erfindungsgemäßen Mischung ist optional. Es kann sich um einen oder mehrere Stoffe handeln, welche insgesamt als Komponente E) in Mengen bis zu 200 Gewichtsteilen, vorzugsweise nicht mehr als 100 Gewichtsteilen, bezogen auf 100 Teile der Summe der Komponenten A) bis C), einsetzbar sind.

Zu üblichen Zuschlagstoffen oder Additiven gehören unter anderem Füllstoffe, Gleitmittel, die von den unter D) genannten Weichmachern verschieden sind, Flexibilisierungsmittel, Pigmentierungsmittel, Farbstoffe, Entformungsmittel und andere.

Als Füllstoff geeignet sind beispielsweise synthetische Polymere, die nahezu in der Mischung löslich sind, wie etwa auf Milchsäure basierende Polymere, wie ®Lacea der Firma Mitsui, ®Resomerder Firma Boehringer Ingelheim, sowie weitere Polymere auf der Basis von Milchsäure und artverwandte Polymere der Milchsäure, der Firmen Wako Pure Chemical Industries Ltd., Medisorb Co., Birmingham Polymers, Inc., Polysciences Inc., Purac Biochem BV, Ethicon, Cargill oder Chronopo, wobei einsichtig ist, daß diese Aufzählung nicht einer absoluten Vollständigkeit entsprechen kann. Weiterhin Verwendung finden können bioabbaubare Polyester, deren Grundbausteine von der Milchsäure oder Glykolsäure verschieden sind, jedoch bevorzugt aus physiologisch unbedenklichen Hydroxycarbonsäuren bestehen. In diesem Zusammenhang kann ein Copolyester auf Basis von Hydroxybutter- und Hydroxyvaleriansäure, ®Biopol, als ein solcher Vertreter genannt werden.

Weiter wird vorgeschlagen, mindestens einen anorganischen Füllstoff, wie beispielsweise Magnesiumoxid, Aluminiumoxid, SiO₂, TiO₂ usw. zuzusetzen.

Zum Einfärben der Mischung eignen sich insbesondere organische oder anorganische Pigmente, besonders auch biokompatible, also als unbedenklich für lebende Organismen einzustufende sog. Perlglanzpigmente, basierend auf Silikatstrukturen, die damit prinzipiell als eßbar einzustufen sind und in Mengen zwischen 0,001 und 10 Gewichtsteilen eingesetzt werden.

Zur Verbesserung der Fliesseigenschaften eignen sich insbesondere tierische oder pflanzliche Fette und/oder Lecithine, die vorzugsweise in hydrogenierter Form verwendet werden, wobei diese Fette und sonstigen Fettsäurederivate vorzugsweise einen Schmelzpunkt von größer 50 °C aufweisen.

Um die Hydrophilie und damit die Wasserunbeständigkeit der thermoplastisch verarbeitbaren Mischung während und nach der Verarbeitung zu reduzieren, kann dem Gemisch ein Vernetzungsmittel in untergeordneten Mengen zugesetzt werden, um die Stärke chemisch zu modifizieren. Vorzugsweise werden hierzu Alkylsiloxane in Mengen bis zu 5 Gewichtsteilen eingesetzt.

Als Vernetzungsmittel eignen sich unter anderem auch, zwei- oder mehrwertige Carbonsäuren sowie deren Anhydride, Säurehalogenide von zwei- oder mehrwertige Carbonsäuren, Säureamide von zwei- oder mehrwertige Carbonsäuren, Derivate von zwei- oder mehrwertige anorganischen Säuren, Epoxide, Formaldehyd und/oder Harnstoffderivate, Divinylsulfone, Isocyanate, Oxoverbindungen und/ Cyanamid, wobei sich diese Verbindungen auch besonders zur chemischen Modifizierung im Anschluß an die thermoplastische Verarbeitung eignen und somit zur weiteren Verbesserung insbesondere der mechanischen Eigenschaften beitragen können.

Weiters kann die Mischung der Erfindung auch eine Komponente E') aufweisen. Die Komponente E') ist mithin wie die Komponente E) optionaler Bestandteil der erfindungsgemäßen Mischung.

Hierbei handelt es sich um Phosphate, die zur weiteren Verbesserung der Plastifizierung der Biopolymermischung und zur Steigerung der mechanischen Eigenschaften der resultierenden Produkte nützlich sein können.

Bei der Komponente E') handelt es sich gemäß der Erfindung wie erwähnt um Phosphate. Hierunter werden im Rahmen der Erfindung Salze und Ester der verschiedenen Phosphorsäuren verstanden. Bei weitem bevorzugt sind für die Erfindung allerdings die Salze der verschiedenen Phosphorsäuren. Erfindungsgemäß können als Komponente E') ein oder mehrere Salze und/oder Ester der verschiedenen Phosphorsäuren, mithin also ein oder mehrere Phosphate die Komponente E') bilden.

Als Komponente E') kommen mit gutem Erfolg unter anderem Ortho-Phosphate der allg. Formeln M^{I}H₂PO₄ (z.B. NaH₂PO₄) und M^{I}(H₂PO₄)₂ [z.B. Ca(H₂PO₄)₂], sekundäre Ortho-Phosphate der allgemeinen Formeln M^{I}₂HPO₄ oder M^{I}HPO₄ (z.B. K₂HPO₄, CaHPO₄) oder tertiäre Ortho- Phosphate der allgemeinen Formeln M^{I}₃PO₄ oder M^{I}₃(PO₄)₂ [z.B. Na₃PO₄, Ca₃(PO₄)₂], wobei M^{I} für ein einwertiges Kation wie beispielsweise ⁺NRR'R''R''', worin R, R', R" und R''' unabhängig voneinander gleich oder verschieden für Wasserstoff, (C₁-C₈)-Alkyl, linear oder verzweigt, (C₄-C₈)-Aryl, vorzugsweise Phenyl stehen, Alkalimetallion, bevorzugt Na⁺ oder K⁺, M^{I} für ein zweiwertiges Kation, vorzugsweise Erdalkalimetallion, besonders bevorzugt Ca²⁺ steht, zum Einsatz.

Von besonderem Interesse als Komponente E') ist ferner die sich von den sauren Salzen der Orthophosphorsäure ableitende Gruppe der beim Erhitzen durch Wasseraustritt entstehenden kondensierten Phosphate, welche sich wiederum in Metaphosphate (systematische Bezeichnung: cyclo-Polyphosphate) und Polyphosphate (systematische Bezeichnung: catena-Polyphosphate) unterteilen lassen.

Zu bevorzugten Vertretern sind neben anderen das Grahamsche Salz, Kurrolsche Salz und Maddrellsche Salz sowie Schmelz- oder Glühphosphate zu zählen.

Besonders zweckmäßige Modifizierungsmittel E') sind unter anderem Metaphosphate der allgemeinen Formel M^{I}ₙ[PₙO₃ₙ], worin M^{I} ein einwertiges Kation, bevorzugt Metallion, zweckmäßig Alkalimetallion, bevorzugt Na⁺ oder K⁺, oder ⁺NRR'R"R''', worin R, R', R" und R''' unabhängig voneinander gleich oder verschieden für Wasserstoff, (C₁-C₈)-Alkyl, linear oder verzweigt, (C₄-C₈)-Aryl, vorzugsweise Phenyl, steht und n eine ganze natürliche positive Zahl bedeutet, vorzugsweise im Bereich zwischen 3 und 10. Hiervon wiederum sind solche Metaphosphate zu bevorzugen, worin n 3, 4 oder 5 und M^{I} Natrium oder Kalium ist. Am meisten bevorzugt sind Natriumtrimetaphosphat, Natriumtetrametaphosphat und Natriumpentametaphosphat.

Vorteilhafte Mischungen ergeben sich auch mit Polyphosphaten der allgemeinen Formel M^{I}ₙ₊₂[PₙO₃ₙ₊₁] oder M^{I}ₙ[H₂ₙPₙO₃ₙ₊₁], worin M^{I} ein einwertiges Kation, bevorzugt Metallion, zweckmäßig Alkalimetallion, bevorzugt Na⁺ oder K⁺, oder ⁺NRR'R"R''', worin R, R', R" und R''' unabhängig voneinander gleich oder verschieden für Wasserstoff, (C₁-C₈)-Alkyl, linear oder verzweigt, (C₄-C₈)-Aryl, vorzugsweise Phenyl, steht und n eine ganze natürliche positive Zahl größer 2 ist. Bevorzugt hiervon sind Natrium und Kaliumpolyphosphate, bei denen n > 10 ist.

Es können auch Mischungen mit günstigen Eigenschaften erhalten werden, wenn als Komponente E') Polyphosphate der allgemeinen Formel M^{l}ₙ₊₂[PₙO₃ₙ₊₁], worin M^{I} ein einwertiges Kation, bevorzugt Metallion, zweckmäßig Alkalimetallion, bevorzugt Na⁺ oder K⁺, oder ⁺NRR'R"R''', worin R, R', R" und R''' unabhängig voneinander gleich oder verschieden für Wasserstoff, (C₁-C₈)-Alkyl, linear oder verzweigt, (C₄-C₈)-Aryl, vorzugsweise Phenyl, steht und n eine ganze natürliche positive Zahl im Bereich zwischen 3 und 10 ist, eingesetzt werden. Unter anderem ist hiervon Pentanatriumtripolyphosphat bevorzugt.

Eine günstige Abwandlung der erfindungsgemäßen thermoplastischen Mischung ergibt sich dadurch, daß die Komponente E') Natriumtrimetaphosphat, Natriummetaphosphat, Natriumpolyphosphat und/oder Natriumhexametaphospat, vorzugsweise Natriumpolyphosphat, ist.

Die Mischungen der Erfindung können über die Zusammensetzung in Gewichtsprozent charakterisiert werden.

Es versteht sich jedoch, daß die Mischungskomponenten beim Vermischen in Wechselwirkung miteinander treten und daß gegebenenfalls in der fertigen thermoplastischen Mischung auf Basis von Stärke, die eine oder andere Komponente in veränderter Form vorliegen kann.

Insofern ist Gegenstand der Erfindung auch eine thermoplastische Mischung auf Basis von Stärke, die erhältlich ist durch Bereitstellen und Mischen von
A) 100 Gew.-Teilen eines oder mehrerer physiologisch unbedenklicher, biologisch abbaubarer, thermoplastisch verarbeitbarer Stärken vorzugsweise wenigstens einer beliebigen nativen, chemisch modifizierten, fermentativen, rekombinanten und/oder durch Biotransformation hergestellten Stärke und/oder von Derivaten der genannten Stärken;
B) 10 bis 100 Gew.-Teilen Wasser;
C) 1 bis 100 Gew.-Teilen Ugnin;
D) gegebenenfalls bis 50 Gew.-Teilen, bezogen auf 100 Gew.-Teile der Summe der Komponenten A) bis C), eines oder mehrerer Weichmacher;
E) gegebenenfalls bis zu 200 Gew.-Teilen, vorzugsweise nicht mehr als 100 Gew.-Teilen, bezogen auf 100 Gew.-Teile der Summe der Komponenten A) bis C), weiterer üblicher Zusätze;
wobei das Mischen der Komponenten unter Einbringung von thermischer und mechanischer Energie in die thermoplastische Mischung erfolgt.

Dabei ist hervorzuheben, daß die Komponenten A) bis E) der erfindungsgemäßen Mischung derart miteinander vermengt werden, daß das Mischen unter Einbringung von thermischer und mechanischer Energie in die thermoplastische Mischung erfolgt.

Vorzugsweise erfolgt die Einbringung der mechanischen und der thermischen Energie gleichzeitig, z.B. durch Arbeiten unter erhöhter Temperatur und gleichzeitiger Ausübung von Scherkräften auf die zu plastifizierende thermoplastische Mischung auf Stärkebasis.

Im allgemeinen gilt, daß eine bessere Homogenität der Mischungen bei höheren Temperaturen resultiert. Allerdings sollen die Temperaturen nicht zu hoch liegen, um unnötige Verfärbungen oder Zersetzung der Formmassen zu vermeiden.
In diesem Zusammenhang ist die thermoplastische Mischung der Erfindung in bevorzugter Abwandlung erhältlich durch Mischen bei Temperaturen im Bereich von > 60 °C bis 220 °C.
Grundsätzlich steigt die Homogenisierung der Mischung mit der eingebrachten Leistung an. D. h. je höher die eingebrachte Leistung in das Mischaggregat ist, um so besser erfolgt die Homogenisierung der thermoplastischen Stärkemischung.
Eine weitere Modifikation der Erfindung sieht daher eine durch Mischen unter Einwirkung von stark scherenden Mischaggregaten erhältliche thermoplastische Mischung vor, wobei die in die Mischung eingebrachte Energie insbesondere an der Leistung der verwendeten Verarbeitungsmaschinen abgeleitet werden kann. So ist eine Verarbeitung vor allem mit Apparaturen möglich, deren Plastifizierungslement mit Drehmomenten ausgestattet sind, die Drehmomente im Bereich von 5 bis 300 Nm (1 Newton Meter) aufweisen. Als vorteilhaft hat sich eine Verarbeitung bei einem Drehmoment im Bereich von 10 bis 100 Nm erwiesen. Bevorzugt wird die Verarbeitung in einem Bereich des Drehmomentes von 20 bis 40 Nm.
Eine besonders günstige Aufnahme von thermischer und/oder mechanischer Energie durch die Mischung wird erreicht, wenn man die Bestandteile der Mischung gemäß der Erfindung in einer Kunststoffverarbeitungsmaschine, wie beispielsweise einem Extruder, Kneter oder ähnlichen Aggregaten mischt und homogenisiert.
Das Verfahren kann vorzugsweise auf Ein- oder Zweischneckenextrudern durchgeführt werden. Diese sind vorzugsweise aus einzelnen Gehäusen zusammengesetzt, die temperierbare Mäntel aufweisen. Die Gestaltung der Schnecken unterliegt keiner Beschränkung, es können Förderelemente (mit oder ohne Schubkanten), Knetelemente und/oder Mischelemente vorhanden sein. Darüber hinaus ist es möglich und häufig vorteilhaft teilweise, d. h. abschnittsweise stauende oder rückfördernde Elemente im Extruder zu verwenden, um Verweilzeit und Mischungseigenschaften zu beeinflussen und zu steuern.

Auch die Reihenfolge der Mischung der Ingredienzen A) bis E) kann unter bestimmten Vorzeichen eine besondere Bedeutung haben.
Gegenstand der Erfindung ist somit auch ein Verfahren zur Herstellung einer thermoplastische Mischung auf Stärkebasis, bei dem man
A) 100 Gew.-Teile eines oder mehrerer physiologisch unbedenklicher, biologisch abbaubarer, thermoplastisch verarbeitbarer, vorzugsweise wenigstens einer beliebigen nativen, chemisch modifizierten, fermentativen, rekombinanten und/oder durch Biotransformation hergestellten Stärke und/oder von Derivaten der genannten Stärken;
B) 10 bis 100 Gewichtsteile Wasser;
C) 1 bis 100 Gewichtsteile Lignin; und
D) gegebenenfalls bis 50 Gewichtsteile, bezogen auf 100 Gewichtsteile der Summe der Komponenten A) bis C), mindestens eines Weichmachers;
E) gegebenenfalls bis zu 200 Gewichtsteile, vorzugsweise nicht mehr als 100 Gew.-Teile, bezogen auf 100 Gewichtsteile der Summe der Komponenten A) bis C), weiterer üblicher Zusätze;
bereitstellt und miteinander vermischt,
wobei man die Komponenten unter Einbringung von thermischer und mechanischer Energie in die Mischung, vorzugsweise bei erhöhter Temperatur und gleichzeitiger Ausübung von Scherkräften auf die Mischung, thermoplastifiziert.

Die erfindungsgemäße thermoplastische Formmasse läßt sich nach den bekannten Verarbeitungsverfahren zu Produkten verarbeiten. So kann sie z. B. in einem ersten Schritt granuliert oder pelletisiert werden.

Gegenstand der Erfindung ist somit auch ein Granulat, das durch Extrusion und elletisierung aus der thermoplastischen Mischung gemäß der Erfindung erhältlich ist.

Außerdem können entweder direkt oder durch erneutes thermoplastisches Verarbeiten eines sich thermoplastisch verhaltenden Granulats biologisch gut abbaubare Formteile oder Folien mit verbesserten Eigenschaften, beispielsweise verbesserten mechanischen Eigenschaften erhalten werden.
Schließlich gehört zur Erfindung insbesondere auch die Verwendung der thermoplastischen Mischungen zur Herstellung von Formteilen oder Folien.
Insgesamt decken die erfindungsgemäßen Produkte damit eine Vielzahl von Anwendungsmöglichkeiten ab. Hierzu gehören im einzelnen unter anderem Klebstoffadhäsive für Papier und Wellpappe, Formkörper, die durch Spritzguß hergestellt werden, vor allem Stäbe, Rohre, Flaschen, Kapseln, Granulate, Lebensmittelzusatzstoffe, Filme, als Überzüge oder freistehende Filme, auch als Laminate, vor allem Folien, Verpackungsmaterialien, Beutel, Retardmaterialien zur kontrollierten Freisetzung von Wirkstoffen im allgemeinen, insbesondere Pharmaka, Pestizide oder andere in der Agrokultur eingesetzte Wirkstoffe, Dünger, Aromastoffe etc. Dabei kann die Freigabe der aktiven Substanz aus Filmen, Folien, Preßlingen, Partikeln, Mikropartikeln, Stäbchen oder anderen Extrudaten oder sonstigen Formkörpern erfolgen.

Weitere bevorzugte Anwendungen umfassen Lebensmittelverpackungen, insbesondere Wurst- oder Käsehüllen, Absorber, Puder und dergleichen.

In einer besonderen Ausführungsform werden die thermoplastischen Mischungen gemäß der Erfindung zur Herstellung von Formkörpern zur kontrollierten Freigabe von Wirkstoffen, wie etwa Tabletten oder Dragées, verwendet.

Eine weitere zweckmäßige und besonders günstige Verwendung der thermoplastischen Mischung gemäß der Erfindung betrifft die Herstellung von Formkörpern, die sich zur Herstellung von massiven Formkörpern, Hohlkörpern oder Kombinationen davon eignen.

Noch eine herausragende Verwendung der erfindungsgemäßen thermoplastischen Mischung ist in der Herstellung von Folien zum Gebrauch in der Landwirtschaft angesiedelt.

In weiters besonderer Abwandlung sieht die Erfindung die Verwendung der thermoplastischen Mischung zur Herstellung von Folien zum Gebrauch in der Lebensmittelanwendung vor.

Noch eine spezielle erfindungsgemäße Verwendung der thermoplastischen Mischung liegt in der Herstellung von Folien zum Gebrauch als Lebensmittelumverpackung.

Eine weiterhin ausgesprochen günstige Verwendung der thermoplastischen Mischung gemäß der Erfindung ergibt sich bei der Herstellung von Folien zum Gebrauch als Lebensmittelverpackung mit vollständigem Flächenkontakt zum Lebensmittel.

Schließlich ist auch eine Verwendung der thermoplastischen Mischung gemäß der Erfindung besonders vorteilhaft, bei der Flach- oder tubulare Folien zur Verwendung als Lebensmittelhüllen für Wurst und Käse hergestellt werden.

Die nachfolgenden Beispiele veranschaulichen den Gegenstand der Erfindung.

### Beispiel 1

Herstellung eines thermoplastisch verarbeitbaren Blendgemisches aus Kartoffelstärke, Lignin, Glyzerin und Glyoxal:

Die Verbindungen werden in einem handelsüblichen Knetaggregat hergestellt (Brabender Kneter). Das Knetaggregat wird auf 100 °C aufgeheizt. 30 g Kartoffelstärke (Toffena der Fa. Südstärke) werden vorgelegt. Dann werden 15 g Wasser zugegeben und mit der vorgelegten Stärke homogenisiert. Nach ca. 5 Minuten werden 3 g Lignin und 9 g Glyzerin zugegeben. Nach weiteren 5 Minuten werden 3 g Glyoxal (40 %ige wäßrige Lösung) hinzuaddiert. Nach ca. 10 Minuten und erfolgter Homogenisierung wird die Formmasse entnommen, während das Gerät noch in heißem Zustand ist. Die Formmasse ist bernsteinfarben, überwiegend homogen und läßt sich direkt weiterverarbeiten.

Mit Hilfe einer Presse (siehe Beispiel 2) lassen sich über das Aufschmelzen der Formmasse homogene transparente feste Folien mit außergewöhnlicher Bruchfestigkeit erhalten. Die Folien zeichnen sich durch eine organische Oberfläche, d.h. eine sich angenehm anfassende Rauhigkeit und natürliche Strukturiertheit aus. Die Folien haben einen angenehmen aromatischen, leicht süßlichen Geruch.

### Beispiel 2

Herstellung von Folien mittels Preßtechnik aus thermoplastischen Formmassen, die Lignin enthalten:

Hierzu wird eine handelsübliche Presse der Fa. Schwabenthan (Polystat 300 S) verwendet. Die Presse wird auf 100 °C vorgeheizt. Die Probenpräparation erfolgt in einer "Sandwich-Technik" zwischen zwei gewebeverstärkte Polytetrafluorethylen (PTFE, ®Teflon), die mit einem etwa 100 mm dicken metallischen Rahmen auf Abstand gehalten werden. Etwa 2 g der im Kneter hergestellten Masse werden bei der Präparation in Mitte der unteren Folie plaziert. Die Probe wird 5 Minuten bei 100 °C und einem Druck von 1 t temperiert. Anschließend wird die Probe bei 100 °C für 5 Minuten und einem Druck von 10 t gepreßt. Dies entspricht einem Druck von 200 bar. Die Presse wird entlastet und die Probe wird an eine andere Presse zwecks Abkühlung überführt. Hierbei handelt es sich um eine wassergekühlte Presse der Fa. Robert Fuchs Hydraulische Maschinen und Werkzeuge. Während des Abkühlvorgangs über eine Zeit von 2 Minuten wird ein Druck von 50 bar angelegt. Im Anschluß kann die Probe entnommen werden, um sie für weitere Untersuchungen einzusetzen. Anzumerken ist, daß die Lagerung an der Luft je nach der Hydrophilie der verwendeten Materialien Alterungserscheinungen aufweist, die auf schwankende Wasserinhalte zurückzuführen ist.

### Beispiel 3

Herstellung eines thermoplastisch verarbeitbaren Blendgemisches aus Kartoffelstärke, Casein, Lignin, Glyzerin und Natriumpolyphosphat:

Die Verbindungen werden in einem handelsüblichen Knetaggregat hergestellt (Brabender Kneter). Das Knetaggregat wird auf 100 °C aufgeheizt. 30 g Kartoffelstärke (Toffena der Fa. Südstärke) und 6 g Casein werden im Kneter vorgelegt. Dann werden 15 g Wasser zugegeben und mit der vorgelegten Mischung aus Stärke und Protein homogenisiert. Nach ca. 5 Minuten werden 3 g Lignin und 6 g Glyzerin zugegeben. Nach weiteren 5 Minuten werden zunächst 0,9 g Na₂CO₃ in 2 ml Wasser hinzugeben und anschließend 1,2 g Natriumpolyphosphat (Riedel de Ha) gelöst in 5 ml Wasser. Nach ca. Weiteren 10 Minuten und erfolgter Homogenisierung wird die Formmasse entnommen, während das Gerät noch in beheiztem Zustand ist. Die Formmasse ist braun, überwiegend homogene Formmasse.
Diese Formmasse eignet sich aufgrund ihrer Festigkeit überwiegend zur Verarbeitung im Spritzgußverfahren und führt zu sehr formstabilen Gegenständen.

### Beispiel 4

Herstellung eines thermoplastisch verarbeitbaren Blendgemisches aus Maisstärke, Lignin, Cellulose, Glyzerin und Glyoxal:

Die Verbindungen werden in einem handelsüblichen Knetaggregat hergestellt (Brabender Kneter). Das Knetaggregat wird auf 130 °C aufgeheizt. 20 g Lignin werden vorgelegt. Dann werden 15 g Wasser zugegeben und mit dem vorgelegten Lignin homogenisiert. Nach etwa 15 Minuten 20 g Maisstärke (Maize Starch der Fa. National Starch) hinzugefügt und 15 Minuten geknetet. Dann werden 1 g Cellulosepulver und ca. 3 Minuten danach werden 8 g Glyzerin hinzuaddiert. Zu der homogenisierten Masse werden 0,4 g Glyoxal (40 %ige wäßrige Lösung) hinzugefügt. Nach ca. 10 Minuten wird die Formmasse aus dem noch beheizten Gerät entnommen. Die Formmasse ist dunkel gefärbt, weich, homogen, flexibel und läßt sich zu Formkörern und Folien weiterverarbeiten.

### Beispiel 5

Herstellung eines thermoplastisch verarbeitbaren Blendgemisches aus Kartoffelstärke, Lignin und Glyzerin:

Die Verbindungen werden in einem handelsüblichen Knetaggregat hergestellt (IKA Duplex Kneter). Das Knetaggregat wird auf 130 °C aufgeheizt. 150 g Kartoffelstärke (Toffena der Fa. Südstärke) werden im Kneter vorgelegt. Dann werden 90 g Wasser zugegeben und mit der vorgelegten Stärke homogenisiert. Nach ca. 20 Minuten werden 22,5 g Lignin. Es wird 10 Minuten geknetet. Dann werden 22,5 g Glyzerin zugegeben. Nach weiteren 10 Minuten, wenn eine homogene Massen entstanden ist, wird der Versuch beendet. Die thermoplastische Formmasse wird in noch heißem Zustand des Gerätes entnommen. Die Formmasse ist braun, homogen, flexibel Formmasse.

Diese Formmasse eignet sich aufgrund ihrer Festigkeit überwiegend zur Verarbeitung im Spritzgußverfahren und führt zu sehr formstabilen Gegenständen.

Weitere Vorteile und Ausführungsformen der Erfindung ergeben sich aus den nachfolgenden Patentansprüchen.

## Patentansprüche

1. Thermoplastische Mischung auf Basis von Stärke zur Herstellung von biologisch abbaubaren Formkörpern mit verbesserten mechanischen Eigenschaften, **gekennzeichnet durch** einen Gehalt an einer wirksamen Menge Lignin sowie einen Gehalt an Wasser, der für die Plastifizierung ausreichend ist

2. Thermoplastische Mischung nach Anspruch 1, **dadurch gekennzeichnet, daß** das Gewichtsverhältnis von Lignin zu Stärke im Bereich von 1 : 1000 bis 1 : 1, vorzugsweise zwischen 1 : 100 und 1 : 2, ist

3. Thermoplastische Mischung nach einem oder mehreren der vorhergehenden Ansprüche, **dadurch gekennzeichnet, daß** die Stärke ausgewählt ist unter einer nativen, chemisch modifizierten, fermentativ erhaltenen, rekombinant erhaltenen und/oder durch Biotransformation hergestellten Stärke, einem Derivat der genannten Stärkesorten, einer Mischung von einer oder mehreren der vorgenannten Stärken und einer Mischung von einer oder mehreren der vorgenannten Stärken und einem oder mehreren Derivaten von Stärke.

4. Thermoplastische Mischung nach einem oder mehreren der vorhergehenden Ansprüche, **dadurch gekennzeichnet, daß** das Lignin ein Alkali-Lignin ist.

5. Thermoplastische Mischung nach einem oder mehreren der vorhergehenden Ansprüche, aufweisend
A) 33 - 90 Gew.-% (w/w) einer oder mehrerer biologisch abbaubarer, thermoplastisch verarbeitbarer Stärken;
B) 5 - 35 Gew.-% (w/w) Wasser;
C) 0,5 - 35 Gew.-% (w/w) Lignin;
wobei die Komponenten A) bis C) zusammen 100 Gew.-% ergeben; sowie gegebenenfalls
D) bis 50 Gewichtsteile, bezogen auf 100 Gewichtsteile der Summe der Komponenten A) bis C), eines oder mehrerer Weichmacher; und
E) bis 200 Gewichtsteile, vorzugsweise nicht mehr als 100 Gewichtsteile, bezogen auf 100 Gewichtsteile der Summe der Komponenten A) bis E), weiterer üblicher Zusätze.

6. Thermoplastische Mischung nach Anspruch 5, **dadurch gekennzeichnet, daß** die Komponente C) in einer Menge von wenigstens 1 Gew.-% (w/w) in der Mischung enthalten ist.

7. Thermoplastische Mischung nach Anspruch 5 oder 6, **dadurch gekennzeichnet, daß** die Komponente C) in einer Menge im Bereich von 2,5 bis 25 Gew.-% (w/w) in der Mischung enthalten ist

8. Thermoplastische Mischung nach einem oder mehreren der vorhergehenden Ansprüche 1 bis 4, erhältlich durch Bereitstellen und Mischen von
A) 100 Gew.-Teilen einer oder mehrerer biologisch abbaubarer, thermoplastisch verarbeitbarer Stärken, vorzugsweise wenigstens einer beliebigen nativen, chemisch modifizierten, fermentativen, rekombinanten und/oder durch Biotransformation hergestellten Stärke und/oder von Derivaten der genannten Stärken;
B) 10 bis 100 Gew.-Teilen Wasser;
C) 1 bis 100 Gew.-Teilen Lignin;
D) gegebenenfalls bis 50 Gew.-Teilen eines oder mehrerer Weichmacher;
und
E) gegebenenfalls bis zu 200, vorzugsweise nicht mehr als 100 Gew.-Teilen, weiterer üblicher Zusätze;
wobei das Mischen der Komponenten unter Einbringung von thermischer und mechanischer Energie in die thermoplastische Mischung erfolgt.

9. Thermoplastische Mischung nach einem oder mehreren der vorhergehenden Ansprüche 1 bis 8, **dadurch gekennzeichnet, daß** als Stärke eine physiologisch unbedenkliche Stärke eingsetzt wird.

10. Thermoplastische Mischung nach Anspruch 8 oder 9, **dadurch gekennzeichnet, daß** sie durch Mischen bei Temperaturen im Bereich von > 60°C bis etwa 220°C erhältlich ist.

11. Thermoplastische Mischung nach einem oder mehreren der vorhergehenden Ansprüche 8 bis 10, **dadurch gekennzeichnet, daß** sie durch Mischen unter Einwirkung von stark scherenden, Plastifizierungselemente aufweisenden Mischaggregaten erhältlich ist, wobei mit den Plastifizierungslementen Drehmomente im Bereich von 10 bis 100 Nm, vorzugsweise 20 bis 40 Nm, erzielbar sind.

12. Verfahren zu Herstellung einer thermoplastischen Mischung auf Basis von Stärke, bei, dem man
A) 100 Gew.-Teile einer oder mehrerer biologisch abbaubarer, thermoplastisch verarbeitbarer, vorzugsweise wenigstens einer beliebigen nativen, chemisch modifizierten, fermentativen, rekombinanten und/oder durch Biotransformation hergestellten Stärke und/oder von Derivaten der genannten Stärken;
B) 10 bis 100 Gewichtsteile Wasser;
C) 1 bis 100 Gewichtstetle Lignin; und
D) gegebenenfalls bis 50 Gewichtsteile mindestens eines Weichmachers;
E) gegebenenfalls bis zu 200 Gewichtsteile, vorzugsweise nicht mehr als 100 Gew.-Teile weitere übliche Zusätze;
bereitstellt und miteinander vermischt,
wobei man die Komponenten unter Einbringung von thermischer und mechanischer Energie in die Mischung, vorzugsweise bei erhöhter Temperatur und gleichzeitiger Ausübung von Scherkräften auf die Mischung, thermoplastifiziert

13. Granulat erhältlich aus der thermoplastischen Mischung gemäß den vorhergehenden Ansprüchen 1 bis 11 durch Extrusion und Pelletisierung.

14. Biologisch abbaubares Formteil oder Folie mit verbesserten Eigenschaften, vorzugsweise verbesserten mechanischen Eigenschaften, aufweisend die thermoplastische Mischung gemäß den Ansprüchen 1 bis 11.

15. Verwendung der thermoplastischen Mischung gemäß den Ansprüchen 1 bis 11 zur Herstellung von Formteilen oder Folien.

16. Verwendung der thermoplastischen Mischung gemäß den Ansprüchen 1 bis 11 zur Herstellung von Formkörpern zur kontrollierten Freigabe von Wirkstoffen.

17. Verwendung der thermoplastischen Mischung gemäß den Ansprüchen 1 bis 11 zur Herstellung von Formkörpern zur Herstellung von massiven Formkörpern, Hohikörpern oder Kombinationen davon.

18. Verwendung der thermoplastischen Mischung gemäß den Ansprüchen 1 bis 11 zur Herstellung von Folien zum Gebrauch in der Landwirtschaft.

19. Verwendung der thermoplastischen Mischung gemäß den Ansprüchen 1 bis 11 zur Herstellung von Folien zum Gebrauch in der Lebensmittelanwendung.

20. Verwendung der thermoplastischen Mischung gemäß den Ansprüchen 1 bis 11 zur Herstellung von Folien zum Gebrauch als Lebensmittelumverpackung.

21. Verwendung der thermoplastischen Mischung gemäß den Ansprüchen 1 bis 11 zur Herstellung von Folien zum Gebrauch als Lebensmittelverpackung mit vollständigem Flächenkontakt zum Lebensmittel.

22. Verwendung der thermoplastischen Mischung gemäß den Anspruchen 1 bis 11 zur Herstellung von Flach- oder tubularen Folien zur Verwendung als Lebensmittelhüllen für Wurst und Käse.

23. Verwendung von Lignin zur Verbesserung der Eigenschaften, insbesondere der mechanischen Eigenschaften, von thermoplastischen Werkstoffen auf Basis von Stärke.

## Claims

1. A thermoplastic mixture based on starch for producing shaped biodegradable articles with improved mechanical properties, wherein an effective amount of lignin, and also sufficient water for plastification, are present.

2. A thermoplastic mixture as claimed in claim 1, wherein the ratio by weight of lignin to starch is within the range from 1:1000 to 1:1, preferably from 1:100 to 1:2.

3. A thermoplastic mixture as claimed in one or more of the preceding claims, wherein the starch has been selected from the group consisting of starch which is native, chemically modified, obtained by a fermentative process, obtained by a recombinant process and/or prepared by biotransformation, derivatives of the types of starch mentioned, mixtures of one or more of the abovementioned starches and mixtures of one or more of the abovementioned starches with one or more derivatives of starch.

4. A thermoplastic mixture as claimed in one or more of the preceding claims, wherein the lignin is an alkali lignin.

5. A thermoplastic mixture as claimed in one or more of the preceding claims, comprising
A) from 33 to 90% by weight of one or more biodegradable, thermoplastically processable starches;
B) from 5 to 35% by weight of water;
C) from 0.5 to 35% by weight of lignin;
where components A) to C) together give 100% by weight;
and also, if desired,
D) up to 50 parts by weight, based on 100 parts by weight of the total of components A) to C), of one or more plasticizers; and
E) up to 200 parts by weight, preferably not more than 100 parts by weight, based on 100 parts by weight of the total of components A) to E), of other conventional additives.

6. A thermoplastic mixture as claimed in claim 5, wherein the amount of component C) present in the mixture is at least 1% by weight.

7. A thermoplastic mixture as claimed in claim 5 or 6, wherein the amount of component C) present in the mixture is within the range from 2.5 to 25% by weight.

8. A thermoplastic mixture as claimed in one or more of the preceding claims 1 to 4,
obtainable by preparing and mixing
A) 100 parts by weight of one or more biodegradable, thermoplastically processable starches, preferably at least one starch of any type which is native, chemically modified, fermentative, recombinant and/or prepared by biotransformation, and/or derivatives of the starches mentioned;
B) from 10 to 100 parts by weight of water;
C) from 1 to 100 parts by weight of lignin;
D) if desired, up to 50 parts by weight of one or more plasticizers; and
E) if desired, up to 200 parts by weight, preferably not more than 100 parts by weight, of other conventional additives;
where the mixing of the components takes place with introduction of thermal and mechanical energy into the thermoplastic mixture.

9. A thermoplastic mixture as claimed in one or more of the preceding claims 1 to 8, wherein the starch used comprises a physiologically nonhazardous starch.

10. A thermoplastic mixture as claimed in claim 8 or 9, which is obtainable by mixing at temperatures within the range from > 60°C to about 220°C.

11. A thermoplastic mixture as claimed in one or more of the preceding claims 8 to 10, which is obtainable by mixing using strongly shearing mixing assemblies having plastifying elements which can achieve torques within the range from 10 to 100 Nm, preferably from 20 to 40 Nm.

12. A process for preparing a thermoplastic mixture based on starch, in which
A) 100 parts by weight of one or more biodegradable, thermoplastically processable starches, preferably at least one starch of any type which is native, chemically modified, fermentative, recombinant and/or prepared by biotransformation, and/or derivatives of the starches mentioned;
B) from 10 to 100 parts by weight of water;
C) from 1 to 100 parts by weight of lignin;
D) if desired, up to 50 parts by weight of one or more plasticizers; and
E) if desired, up to 200 parts by weight, preferably not more than 100 parts by weight, of other conventional additives;
are prepared and mixed with one another,
where the components are thermoplastified with introduction of thermal and mechanical energy into the mixture, preferably at an elevated temperature and with simultaneous exertion of shear forces onto the mixture.

13. A pelletized material obtainable from the thermoplastic mixture as claimed in the preceding claims 1 to 11 by extrusion and pelletization.

14. A biodegradable molding or film with improved properties, preferably with improved mechanical properties, comprising the thermoplastic mixture as claimed in any of claims 1 to 11.

15. The use of the thermoplastic mixture as claimed in any of claims 1 to 11 for producing moldings or films.

16. The use of the thermoplastic mixture as claimed in any of claims 1 to 11 for producing shaped articles for the controlled release of active substances.

17. The use of the thermoplastic mixture as claimed in any of claims 1 to 11 to produce shaped articles for producing solid shaped articles, hollow articles or combinations of these.

18. The use of the thermoplastic mixture as claimed in any of claims 1 to 11 for producing films for use in agriculture.

19. The use of the thermoplastic mixture as claimed in any of claims 1 to 11 for producing films for use in food or drink applications.

20. The use of the thermoplastic mixture as claimed in any of claims 1 to 11 for producing films for use as an outer packaging for food or drink.

21. The use of the thermoplastic mixture as claimed in any of claims 1 to 11 for producing films for use as a packaging for food or drink where the packaging has full surface contact with the food or drink.

22. The use of the thermoplastic mixture as claimed in any of claims 1 to 11 for producing flat or tubular films for use as food casings or wrappings for sausage or cheese.

23. The use of lignin for improving the properties, in particular the mechanical properties, of thermoplastic materials based on starch.

## Revendications

1. Mélange thermoplastique à base d'amidon, pour la préparation de corps façonnés biodégradables présentant des propriétés mécaniques améliorées, **caractérisé par** une teneur en une quantité active de lignine ainsi que par une teneur en eau qui est suffisante pour la plastification.

2. Mélange thermoplastique suivant la revendication 1, **caractérisé en ce que** le rapport pondéral entre la lignine et l'amidon est de l'ordre de 1/1000 à 1/1, de préférence compris entre 1/100 et 1/2.

3. Mélange thermoplastique suivant une ou plusieurs des revendications précédentes, **caractérisé en ce que** l'amidon est choisi parmi un amidon natif, chimiquement modifié, obtenu par fermentation, obtenu par recombinaison et/ou préparé par biotransformation, un dérivé des sortes d'amidons citées, un mélange d'un ou de plusieurs des amidons précités et un mélange d'un ou plusieurs des amidons précités et d'un ou plusieurs dérivés d'amidon.

4. Mélange thermoplastique suivant une ou plusieurs des revendications précédentes, **caractérisé en ce que** la lignine est une alcali-lignine.

5. Mélange thermoplastique suivant une ou plusieurs des revendications précédentes, comportant
A) 33-90% en poids (poids/poids) d'un ou de plusieurs amidons biodégradables, traitables de manière thermoplastique,
B) 5-35% en poids (poids/poids) d'eau,
C) 0,5-35% en poids (poids/poids) de lignine, les composants A) à C) formant ensemble 100% en poids, ainsi qu'éventuellement
D) jusqu'à 50 parties en poids, par rapport à 100 parties en poids de la somme des composants A) à C), d'un ou plusieurs agents plastifiants, et
E) jusqu'à 200 parties en poids, de préférence pas plus de 100 parties en poids, par rapport aux 100 parties en poids de la somme des composants A) à E), d'autres additifs courants.

6. Mélange thermoplastique suivant la revendication 5, **caractérisé en ce que** le composant C) est contenu dans le mélange en une quantité d'au moins 1% en poids (poids/poids).

7. Mélange thermoplastique suivant l'une des revendications 5 et 6, **caractérisé en ce que** le composant C) est contenu dans le mélange en une quantité de l'ordre de 2,5 à 25% en poids (poids/poids).

8. Mélange thermoplastique suivant une ou plusieurs des revendications précédentes 1 à 4, que l'on peut obtenir par préparation et mélange de
A) 100 parties en poids d'un ou de plusieurs amidons biodégradables, traitables de manière thermoplastique, de préférence d'au moins un amidon quelconque natif, chimiquement modifié, obtenu par fermentation, obtenu par recombinaison et/ou préparé par biotransformation et/ou de dérivés des amidons cités,
B) 10 à 100 parties en poids d'eau,
C) 1 à 100 parties en poids de lignine,
D) éventuellement jusqu'à 50 parties en poids d'un ou plusieurs agents plastifiants, et
E) éventuellement jusqu'à 200 parties en poids, de préférence pas plus de 100 parties en poids, d'autres additifs courants,
le mélange des composants ayant lieu par introduction d'énergie thermique et mécanique dans le mélange thermoplastique.

9. Mélange thermoplastique suivant une ou plusieurs des revendications précédentes 1 à 8, **caractérisé en ce que**, comme amidon, on met en oeuvre un amidon physiologiquement sans danger.

10. Mélange thermoplastique suivant l'une des revendications 8 et 9, **caractérisé en ce qu'**on peut l'obtenir par mélange à des températures de l'ordre de >60°C jusqu'à environ 220°C.

11. Mélange thermoplastique suivant une ou plusieurs des revendications précédentes 8 à 10, **caractérisé en ce qu'**on peut l'obtenir par mélange sous l'action d'appareillages de mélange présentant des éléments de plastification fortement cisaillants, des moments de rotation de l'ordre de 10 à 100 Nm, de préférence de 20 à 40 Nm, pouvant être obtenus avec les éléments de plastification.

12. Procédé de préparation d'un mélange thermoplastique à base d'amidon, dans lequel on prépare et mélange mutuellement
A) 100 parties en poids d'un ou de plusieurs amidons biodégradables, traitables de manière thermoplastique, de préférence d'au moins un amidon quelconque natif, chimiquement modifié, obtenu par fermentation, obtenu par recombinaison et/ou préparé par biotransformation et/ou de dérivés des amidons cités,
B) 10 à 100 parties en poids d'eau,
C) 1 à 100 parties en poids de lignine, et
D) éventuellement jusqu'à 50 parties en poids d'au moins un agent plastifiant,
E) éventuellement jusqu'à 200 parties en poids, de préférence pas plus de 100 parties en poids, d'autres additifs courants,
procédé dans lequel on thermoplastifie les composants par introduction d'énergie thermique et mécanique dans le mélange, de préférence à une température élevée et en exerçant simultanément des forces de cisaillement sur le mélange.

13. Produit de granulation que l'on peut obtenir à partir du mélange thermoplastique suivant l'une des revendications précédentes 1 à 11, par extrusion et pelletisation.

14. Pièce façonnée ou feuille biologiquement dégradable, présentant des propriétés améliorées, de préférence des propriétés mécaniques améliorées, comportant le mélange thermoplastique suivant l'une des revendications 1 à 11.

15. Utilisation du mélange thermoplastique suivant l'une des revendications 1 à 11, pour la préparation de pièces façonnées ou de feuilles.

16. Utilisation du mélange thermoplastique suivant l'une des revendications 1 à 11, pour la préparation de corps façonnés destinés à une libération contrôlée de substances actives.

17. Utilisation du mélange thermoplastique suivant l'une des revendications 1 à 11, pour la préparation de corps façonnés destinés à la préparation de corps façonnés massifs, de corps creux ou de combinaisons de ceux-ci.

18. Utilisation du mélange thermoplastique suivant l'une des revendications 1 à 11, pour la préparation de feuilles destinées à un usage dans l'agriculture.

19. Utilisation du mélange thermoplastique suivant l'une des revendications 1 à 11, pour la préparation de feuilles destinées à un usage dans le domaine alimentaire.

20. Utilisation du mélange thermoplastique suivant l'une des revendications 1 à 11, pour la préparation de feuilles destinées à un usage comme emballage d'aliment.

21. Utilisation du mélange thermoplastique suivant l'une des revendications 1 à 11, pour la préparation de feuilles destinées à un usage comme emballage d'aliment ayant un contact de surface complet vis-à-vis de l'aliment.

22. Utilisation du mélange thermoplastique suivant l'une des revendications 1 à 11, pour la préparation de feuilles tubulaires ou à plat destinées à une utilisation comme enveloppes alimentaires pour des saucisses et des fromages.

23. Utilisation de lignine pour l'amélioration des propriétés, en particulier des propriétés mécaniques, de matériaux thermoplastiques à base d'amidon.
